(19) Europäisches Patentamt
European Patent Office
Office européen des brevets

(11) EP 3 916 055 A1

# (12) EUROPÄISCHE PATENTANMELDUNG

(43) Veröffentlichungstag:
**01.12.2021 Patentblatt 2021/48**

(51) Int Cl.:
***C08L 69/00** (2006.01)*

(21) Anmeldenummer: **20176390.1**

(22) Anmeldetag: **26.05.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

## (54) POLYCARBONAT-ZUSAMMENSETZUNGEN ENTHALTEND POLYETHERCARBONATPOLYOLE

(57) Beschrieben sind Polyethercarbonatpolyol enthaltende, Polycarbonat-basierte Zusammensetzungen. Die Zusammensetzungen weisen eine durch das Additiv erhöhte Transmission im VIS-Bereich und weitere vorteilhafte Eigenschaften, etwa ein verbessertes Entformungsverhalten auf. Dabei haben bereits geringe Mengen einen signifikanten Einfluss.

EP 3 916 055 A1

Printed by Jouve, 75001 PARIS (FR)

## Beschreibung

Die Erfindung betrifft Zusammensetzungen, enthaltend aromatisches Polycarbonat und Polyethercarbonatpolyole, sowie daraus erhältliche Formteile. Die Zusammensetzungen weisen verbesserte rheologische und optische Eigenschaften sowie ein verbessertes Entformungs- und Verarbeitungsverhalten im Spritzguss auf.

Insbesondere für dünnwandige transparente (Gehäuse-)Teile, etwa Diffusor Sheets in Ultrabooks, Smartphones oder Smartbooks, ist eine niedrige Schmelzeviskosität erforderlich, damit Bauteile mit gleichmäßiger Wandstärke realisiert werden können. Weitere Anwendungsbereiche, in denen gute Fließfähigkeiten gefordert werden, liegen im Automobilbereich (z. B. Scheinwerferabdeckungen, Blenden, Lichtleitsysteme), im E/E-Bereich (Beleuchtungskomponenten, Gehäuseteile, Abdeckungen, Smart Meter-Anwendungen).

Herkömmlich wird zur Fließverbesserung Bisphenol A-Diphosphat (BDP) verwendet, und zwar in Mengen von bis zu mehr als 10 Gew.-%, um den gewünschten Effekt zu erzielen. Dadurch wird aber die Wärmeformbeständigkeit stark herabgesetzt. Dieser Effekt ist beispielsweise in WO 2015/135958 A1 beschrieben.

Weiterhin besteht ein Bedarf, insbesondere für oben genannte Bauteile, die Transmission weiter zu verbessern, um die für die jeweilige Anwendung eingesetzte Energie möglichst gut zu nutzen. Dabei sollten möglichst auch weitere optische Eigenschaften, wie Yellowness-Index (Y.I.) und die Trübung des Materials, verbessert sein. Die Wärmeformbeständigkeit sollte nicht signifikant beeinträchtigt werden, sondern Vicat-Temperaturen sollten weiterhin bevorzugt bei mindestens 135,0°C liegen.

Eine Lösung im Stand der Technik, beschrieben in der WO 2017/178583 A1, sieht vor, Zusammensetzungen aus Polycarbonat Isosorbidester zuzusetzen. Nachteilig bei dieser Lösung ist die recht hohe Flüchtigkeit der Isosorbidester, die im Spritzguss zu einer unerwünschten Belagsbildung führen kann.

Es bestand daher die Aufgabe, Polycarbonat-basierte Zusammensetzungen mit immer noch guter Wärmeformbeständigkeit, d.h. Vicat-Temperaturen von möglichst mindestens 135°C, bevorzugt mindestens 140°C, bereitzustellen, welche verbesserte optische Eigenschaften, d.h. eine höhere Transmission Ty, einen geringeren Yellowness Index (YI) und möglichst geringe Trübung, und gleichzeitig eine verbesserte Fließfähigkeit aufweisen, und zwar bei möglichst ebenfalls verbessertem Entformungs- und Verarbeitungsverhalten.

Überraschenderweise wurde gefunden, dass Polycarbonatzusammensetzungen bessere optische Eigenschaften, d.h. eine höhere Transmission im VIS-Bereich und auch einen geringeren Yellowness-Index, gegenüber nicht entsprechend additivierten Zusammensetzungen aufweisen, wenn Polyethercarbonatpolyole zugesetzt werden. Dabei bleibt die Wärmeformbeständigkeit, bestimmt anhand der Vicat-Temperatur, bei nicht zu großen Mengen des Additivs annähernd erhalten bzw. weiterhin auf einem akzeptablen Niveau bei höheren Konzentrationen an Polyethercarbonatpolyolen. Gleichzeitig werden der Gleit- und Haftreibungskoeffizient reduziert, was ein besseres Entformungs- und Verarbeitungsverhalten im Spritzguss bedeutet.

Polyethercarbonatpolyole sind grundsätzlich bekannt. Die Herstellung von Polyethercarbonatpolyolen erfolgt üblicherweise durch katalytische Umsetzung von Alkylenoxiden (Epoxiden) und Kohlendioxid in Anwesenheit von H-funktionellen Starterverbindungen ("Starter"). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f und g für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Schema (1) gezeigte cyclische Carbonat (beispielsweise für R = $CH_3$ Propylencarbonat, im Folgenden auch als cPC bezeichnet, oder für R = H Ethylencarbonat, im Folgenden auch als cEC bezeichnet).

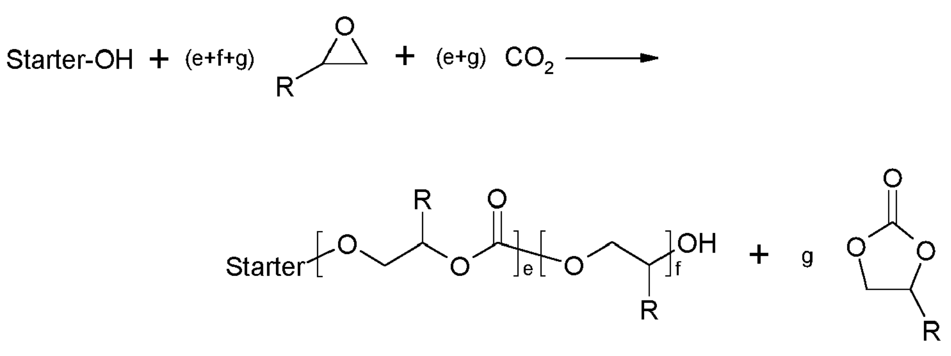

(1)

Ein Verfahren zur Herstellung von Polyethercarbonatpolyolen ist z.B. in EP 2 530 101 A1, in EP 3 027 673 B1 oder in der europäischen Patentanmeldung mit der Anmeldenummer 19189265.2 beschrieben. Die europäische Patentanmeldung mit der Anmeldenummer 19189265.2 beschreibt ein Verfahren zur Herstellung von Polyethercarbonatpolyolen mit einem sehr niedrigen Gehalt an cyclischem Polycarbonat, so dass die Herstellung von Polyethercarbonatpolyolen für erfindungsgemäße Zusammensetzungen nach diesem Verfahren bevorzugt ist. Der Einsatz von Polyethercarbonatpolyolen zusammen mit Isocyanaten zur Herstellung von Polyurethanschaumstoffen ist bekannt und beispielsweise in der WO 2012/130760 A1, der EP 0 222 453 A2 oder der WO 2018/219893 A1 beschrieben. Nicht beschrieben ist jedoch der Einsatz als Additiv für PolycarbonatZusammensetzungen.

Die erfindungsgemäßen Polycarbonatzusammensetzungen, enthaltend Polyethercarbonatpolyole, zeigen verbesserte optische Eigenschaften, messbar an einer höheren optischen Transmission (Transmission im VIS-Bereich, Ty, Lichtart D65), bestimmt nach ISO 13468-2:2006 bei 4 mm Dicke, bevorzugt auch einen niedrigeren Yellowness-Index (YI), bestimmt nach ASTM E 313-15 (Beobachter 10° / Lichtart: D65) an Musterplatten mit einer Schichtdicke von 4 mm, im Vergleich zu entsprechenden Zusammensetzungen, die ansonsten dieselben Komponenten neben Polycarbonat in denselben Mengen außer die Polyethercarbonatpolyole enthalten. Zudem weisen die Zusammensetzungen gute Schmelzestabilitäten mit verbesserten rheologischen Eigenschaften auf, und zwar eine höhere Schmelzevolumenfließrate (MVR), bestimmt nach DIN EN ISO 1133:2012-3 (bei einer Prüftemperatur von 300 °C, Masse 1,2 kg), eine verbesserte Schmelzeviskosität, bestimmt nach ISO 11443:2005, und gute Entformungseigenschaften.

Gegenstand der vorliegenden Erfindung sind daher transparente thermoplastische Zusammensetzungen, enthaltend

A) aromatisches Polycarbonat und
B) Polyethercarbonatpolyol.

"Transparent" im erfindungsgemäßen Sinn bedeutet, dass die Zusammensetzungen eine visuelle Transmission Ty (D65 in 10° Beobachtung) von mindestens 84%, bevorzugt von mindestens 88%, besonders bevorzugt von mindestens 88,5 %, ganz besonders bevorzugt von mindestens 89,0 %, bestimmt nach ISO 13468-2:2006 bei einer Dicke von 4 mm, und eine Trübung < 5%, bevorzugt < 2 %, besonders bevorzugt < 1,5 %, ganz besonders bevorzugt < 1,0 %, bestimmt nach ASTM D1003:2013 bei einer Schichtdicke von 4 mm, aufweisen.

Bevorzugt enthalten die Zusammensetzungen

A) 70,0 Gew.-% bis 99,95 Gew.-% aromatisches Polycarbonat und
B) 0,05 Gew.-% bis 2,0 Gew.-% Polyethercarbonatpolyol.

Weiter bevorzugt enthalten die erfindungsgemäßen Zusammensetzungen

A) 80,0 Gew.-% bis 99,9 Gew.-% aromatisches Polycarbonat und
B) 0,1 Gew.-% bis 1,2 Gew.-% Polyethercarbonatpolyol,
C) 0 bis 1,0 Gew.-% mindestens eines Thermostabilisators und/oder Umesterungsstabilisators,
D) 0 bis 1,0 Gew.-% mindestens eines UV-Absorbers und
E) ggf. ein oder mehrere von den Komponenten B, C und D verschiedene weitere Additive.

Besonders bevorzugt bestehen solche Zusammensetzungen aus

A) 95,0 Gew.-% bis 99,9 Gew.-% aromatischem Polycarbonat und
B) 0,1 Gew.-% bis 1,2 Gew.-% Polyethercarbonatpolyol,
C) 0 bis 1,0 Gew.-% mindestens eines Thermostabilisators und/oder Umesterungsstabilisators,
D) 0 bis 1,0 Gew.-% mindestens eines UV-Absorbers und
E) ggf. einem oder mehreren weiteren Additiven, wobei die weiteren Additive ausgewählt sind aus der Gruppe, bestehend aus Antioxidantien, Entformungsmitteln, Flammschutzmitteln, IR-Absorbern, Antistatika, optischen Aufhellern, Farbmitteln wie organischen Farbstoffen und/oder Additiven zur Lasermarkierung und
F) ggf. Blendpartnern.

$C_1$- bis $C_4$-Alkyl in der nachfolgenden Beschreibung der Erfindung steht im Rahmen der Erfindung beispielsweise für Methyl, Ethyl, n-Propyl, iso-Propyl, n-Butyl, sec.-Butyl, tert.-Butyl, $C_1$- bis $C_6$-Alkyl und darüber hinaus beispielsweise für n-Pentyl, 1-Methylbutyl, 2-Methylbutyl, 3-Methylbutyl, neo-Pentyl, 1-Ethylpropyl, Cyclohexyl, Cyclopentyl,

n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl. $C_1$- bis $C_{10}$-Alkyl steht darüber hinaus beispielsweise für n-Heptyl und n-Octyl, Pinakyl, Adamantyl, die isomeren Menthyle, n-Nonyl, n-Decyl. $C_1$- bis $C_{34}$-Alkyl steht darüber hinaus beispielsweise für n-Dodecyl, n-Tridecyl, n-Tetradecyl, n-Hexadecyl oder n-Octadecyl. Gleiches gilt für den entsprechenden Alkylrest, beispielsweise in Aralkyl- bzw. Alkylaryl-, Alkylphenyl- oder Alkylcarbonylresten. Alkylenreste in den entsprechenden Hydroxyalkyl- oder Aralkyl- bzw. Alkylarylresten stehen beispielsweise für die den vorangehenden Alkylresten entsprechenden Alkylenreste.

Aryl steht für einen carbocyclischen aromatischen Rest mit 6 bis 34 Gerüstkohlenstoffatomen. Gleiches gilt für den aromatischen Teil eines Arylalkylrestes, auch Aralkylrest genannt, sowie für Arylbestandteile komplexerer Gruppen, wie z.B. Arylcarbonylresten.

Beispiele für $C_6$- bis $C_{34}$-Aryl sind Phenyl, o-, p-, m-Tolyl, Naphthyl, Phenanthrenyl, Anthracenyl oder Fluorenyl.

Arylalkyl bzw. Aralkyl bedeutet jeweils unabhängig einen geradkettigen, cyclischen, verzweigten oder unverzweigten Alkyl-Rest nach vorstehender Definition, der einfach, mehrfach oder vollständig durch Aryl-Reste gemäß vorstehender Definition substituiert sein kann.

Im Rahmen der vorliegenden Erfindung beziehen sich die angegebenen Gew.-% der Komponenten A, B, C, D und E- soweit nicht explizit anders angegeben - jeweils auf das Gesamtgewicht der Zusammensetzung. Die Zusammensetzung kann neben den Komponenten A, B, C und D weitere Komponenten - weitere Additive gemäß Komponente E und/oder Blendpartner - enthalten. In einer bevorzugten Ausführungsform enthält die Zusammensetzung keine weiteren Komponenten, sondern die vorgenannten Komponenten, weiter bevorzugt die Komponenten A, B und ggf. C, ggf. D und ggf. E, besonders bevorzugt die Komponenten A bis D, ergänzen sich zu 100 Gew.-%; d.h. die Zusammensetzung besteht aus diesen Komponenten.

Die erfindungsgemäßen Zusammensetzungen werden vorzugsweise zur Herstellung von Formteilen verwendet. Die Zusammensetzungen weisen bevorzugt eine Schmelze-Volumenfließrate (MVR) von 2 bis 75 $cm^3/(10\ min)$, weiter bevorzugt von 3 bis 65 $cm^3/(10\ min)$, besonders bevorzugt von 6 bis 35 $cm^3/(10\ min)$, bestimmt nach ISO 1133:2012-3 (Prüftemperatur 300°C, Masse 1,2 kg), auf.

Die einzelnen Bestandteile der erfindungsgemäßen Zusammensetzungen sind im Folgenden noch näher erläutert:

Komponente A

Unter "Polycarbonat" im erfindungsgemäßen Sinne werden sowohl Homopolycarbonate als auch Copolycarbonate verstanden. Dabei können die Polycarbonate in bekannter Weise linear oder verzweigt sein. Erfindungsgemäß können auch Mischungen von Polycarbonaten verwendet werden.

Die erfindungsgemäße Zusammensetzung enthält als Komponente A bevorzugt 20,0 Gew.-% bis 99,95 Gew.-%, bevorzugt bis 99,9 Gew.-%, insbesondere bis 99,8 Gew.-%, aromatisches Polycarbonat. Vorzugsweise beträgt die Menge des aromatischen Polycarbonats in der Zusammensetzung mindestens 70 Gew.-%, weiter bevorzugt mindestens 75 Gew.-% und noch weiter bevorzugt mindestens 80 Gew.-%, besonders bevorzugt mindestens 87 Gew.-%, ganz besonders bevorzugt mindestens 95,0 Gew.-% wobei ein einzelnes Polycarbonat oder eine Mischung mehrerer Polycarbonate vorliegen kann. Bevorzugt "basiert" die thermoplastische Zusammensetzung somit auf aromatischem Polycarbonat, wobei vorgenannte Definitionen ab "mindestens 70 Gew.-% Polycarbonat" "auf Polycarbonat basierend" bedeuten.

Die Herstellung der Polycarbonate, die in den Zusammensetzungen enthalten sind, erfolgt in bekannter Weise aus Dihydroxyarylverbindungen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117 bis 299 verwiesen.

Die Herstellung aromatischer Polycarbonate erfolgt z.B. durch Umsetzung von Dihydroxyarylverbindungen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Dihydroxyarylverbindungen mit beispielsweise Diphenylcarbonat möglich.

Für die Herstellung der Polycarbonate geeignete Dihydroxyarylverbindungen sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha$-$\alpha$'-Bis-(hydroxyphenyl)-diisopropylbenzole, Phthalimidine, abgeleitet von Isatin- oder Phenolphthaleinderivaten, sowie deren kernalkylierte, kernarylierte und kernhalogenierte Verbindungen.

Bevorzugte Dihydroxyarylverbindungen sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan, sowie die Bisphenole (I) bis (III)

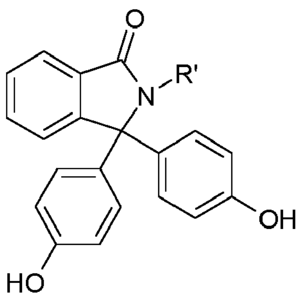
(I)
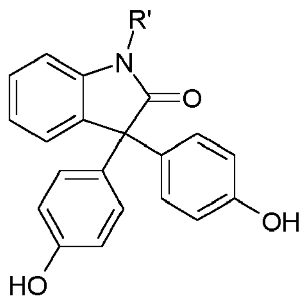
(II)
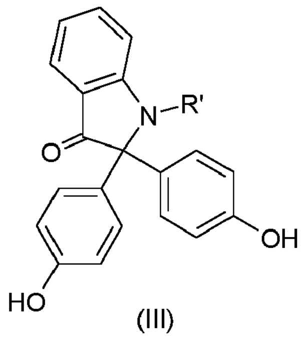
(III) ,

in denen R' jeweils für $C_1$- bis $C_4$-Alkyl, Aralkyl oder Aryl, bevorzugt für Methyl oder Phenyl, ganz besonders bevorzugt für Methyl, steht.

Besonders bevorzugte Bisphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan, 4,4'-Dihydroxydiphenyl und Dimethyl-Bisphenol A sowie die Bisphenole der Formeln (I), (II) und (III).

Diese und weitere geeignete Dihydroxyarylverbindungen sind z.B. in US 3 028 635 A, US 2 999 825 A, US 3 148 172 A, US 2 991 273 A, US 3 271 367 A, US 4 982 014 A und US 2 999 846 A, in DE 1 570 703 A, DE 2063 050 A, DE 2 036 052 A, DE 2 211 956 A und DE 3 832 396 A, in FR 1 561 518 A, in der Monographie "H. Schnell, Chemistry and Physics of Polycarbonates, Interscience Publishers, New York 1964" sowie in JP 62039/1986 A, JP 62040/1986 A und JP 105550/1986 A beschrieben.

Im Fall der Homopolycarbonate wird nur eine Dihydroxyarylverbindung eingesetzt, im Fall der Copolycarbonate werden mehrere Dihydroxyarylverbindungen eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol sowie deren Mischungen.

Bevorzugte Kettenabbrecher sind die Phenole, welche ein- oder mehrfach mit $C_1$- bis $C_{30}$-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Dihydroxyarylverbindungen.

Die Verzweiger können entweder mit den Dihydroxyarylverbindungen und den Kettenabbrechern in der wässrig alkalischen Phase vorgelegt werden oder in einem organischen Lösungsmittel gelöst vor der Phosgenierung zugegeben

werden. Im Fall des Umesterungsverfahrens werden die Verzweiger zusammen mit den Dihydroxyarylverbindungen eingesetzt.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan, sowie von den Dihydroxyarylverbindungen der Formeln (I), (II) und (III)

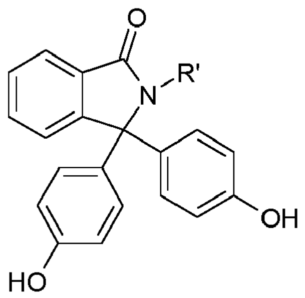
(I)

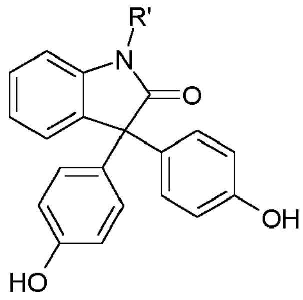
(II)

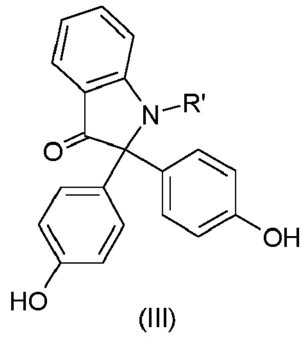
(III) ,

in denen R' jeweils für $C_1$- bis $C_4$-Alkyl, Aralkyl oder Aryl, bevorzugt für Methyl oder Phenyl, ganz besonders bevorzugt für Methyl, steht,

abgeleitete Homo- oder Copolycarbonate.

Zur Einarbeitung von Additiven wird die Komponente A bevorzugt in Form von Pulvern, Granulaten oder von Gemischen aus Pulvern und Granulaten eingesetzt.

Als Polycarbonat kann auch eine Mischung aus verschiedenen Polycarbonaten eingesetzt werden, z.B. aus den Polycarbonaten A1 und A2:

Die Menge des aromatischen Polycarbonats A1 beträgt, bezogen auf die Gesamtmenge an Polycarbonat, bevorzugt 80,0 bis 94,0 Gew.-%, weiter bevorzugt 83,0 bis 93,5 Gew.-%, besonders bevorzugt 84,0 bis 93,2 Gew.-%, wobei dieses aromatische Polycarbonat auf Basis von Bisphenol A mit einer bevorzugten Schmelze-Volumenfließrate MVR von 7 bis 15 $cm^3$/(10 min), weiter bevorzugt mit einer Schmelze-Volumenfließrate MVR von 8 bis 12 $cm^3$/(10 min) und besonders bevorzugt mit einer Schmelze-Volumenfließrate MVR von 8 bis 11 $cm^3$/(10 min), bestimmt gemäß ISO 1133 (Prüftemperatur 300°C, Masse 1,2 kg), ist.

Die Menge des pulverförmigen aromatischen Polycarbonats A2 beträgt, bezogen auf die Gesamtmenge an Polycarbonat, bevorzugt 6,0 bis 20,0 Gew.-%, weiter bevorzugt 6,5 bis 17,0 Gew.-%, besonders bevorzugt 6,8 bis 16,0 Gew.-%, wobei dieses aromatische Polycarbonat bevorzugt auf Basis von Bisphenol A mit einer bevorzugten Schmelze-Volumenfließrate MVR von 4 bis 24 $cm^3$/(10 min), weiter bevorzugt mit einer Schmelze-Volumenfließrate MVR von 5 bis 22 $cm^3$/(10 min), und besonders bevorzugt mit einer Schmelze-Volumenfließrate MVR von 6 bis 20 $cm^3$/(10 min), bestimmt gemäß ISO 1133 (Prüftemperatur 300°C, Masse 1,2 kg), ist.

## Komponente B

Komponente B in den erfindungsgemäßen Zusammensetzungen sind ein oder mehrere Polyethercarbonatpolyole.

Die Komponente B umfasst bevorzugt ein Polyethercarbonatpolyol mit einer Hydroxylzahl (OH-Zahl) gemäß DIN 53240-1:2013-06 von $\geq$ 20 mg KOH/g bis $\leq$ 120 mg KOH/g, weiter bevorzugt von $\geq$ 20 mg KOH/g bis $\leq$ 100 mg KOH/g, besonders bevorzugt von $\geq$ 25 mg KOH/g bis $\leq$ 90 mg KOH/g, welches insbesondere erhältlich ist durch Copolymerisation von Kohlendioxid und einem oder mehreren Alkylenoxiden in Gegenwart eines oder mehrerer H-funktioneller Startermoleküle, wobei das Polyethercarbonatpolyol vorzugsweise einen $CO_2$-Gehalt von 10 bis 25 Gew.-%, weiter bevorzugt 12 bis 20 Gew.-%, noch weiter bevorzugt bis 19 Gew.-%, aufweist.

Bevorzugt umfasst Komponente B ein Polyethercarbonatpolyol, welches erhältlich ist durch Copolymerisation von $\geq$ 2 Gew.-% bis $\leq$ 30 Gew.-% Kohlendioxid und $\geq$ 70 Gew.-% bis $\leq$ 98 Gew.-% einem oder mehreren Alkylenoxiden, in Gegenwart eines oder mehrerer H-funktioneller Startermoleküle. Die Polyethercarbonatpolyole haben beispielsweise eine durchschnittliche Funktionalität von 1 bis 8, bevorzugt von $\geq$ 1 bis $\leq$ 6, weiter bevorzugt von $\geq$ 1 bis $\leq$ 4, besonders bevorzugt von $\geq$ 2 bis $\leq$ 3. Unter "H-funktionell" wird im Sinne der Erfindung eine Starterverbindung verstanden, die gegenüber Alkoxylierung aktive H-Atome aufweist.

Vorzugsweise erfolgt die Copolymerisation von Kohlendioxid und einem oder mehreren Alkylenoxiden in Gegenwart mindestens eines DMC-Katalysators (Doppelmetallcyanid-Katalysators).

Vorzugsweise weisen die erfindungsgemäß eingesetzten Polyethercarbonatpolyole zwischen den Carbonatgruppen auch Ethergruppen auf, was in Formel (IV) schematisch dargestellt wird. In dem Schema gemäß Formel (IV) steht R für einen organischen Rest wie Alkyl, Alkylaryl oder Aryl, der jeweils auch Heteroatome wie beispielsweise O, S, Si usw. enthalten kann, e und f stehen für eine ganzzahlige Zahl. Das im Schema gemäß Formel (IV) gezeigte Polyethercarbonatpolyol soll lediglich so verstanden werden, dass sich Blöcke mit der gezeigten Struktur im Polyethercarbonatpolyol prinzipiell wiederfinden können, die Reihenfolge, Anzahl und Länge der Blöcke aber variieren kann und nicht auf das in Formel (IV) gezeigte Polyethercarbonatpolyol beschränkt ist. In Bezug auf Formel (IV) bedeutet dies, dass das Verhältnis von e/f bevorzugt von 2 : 1 bis 1 : 20, besonders bevorzugt von 1,5 : 1 bis 1 : 10 beträgt.

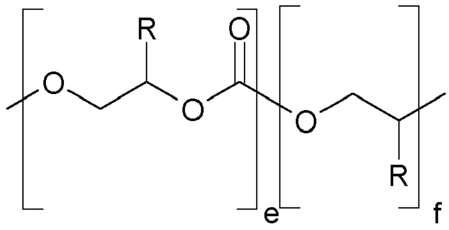

(IV)

Der Anteil an eingebautem $CO_2$ ("aus Kohlendioxid stammende Einheiten"; "$CO_2$-Gehalt") in einem Polyethercarbonatpolyol lässt sich aus der Auswertung charakteristischer Signale im $^1$H-NMR-Spektrum bestimmen. Das nachfolgende Beispiel illustriert die Bestimmung des Anteils an aus Kohlendioxid stammenden Einheiten in einem auf 1,8-Octandiol gestarteten $CO_2$/Propylenoxid-Polyethercarbonatpolyol.

Der Anteil an eingebautem $CO_2$ in einem Polyethercarbonatpolyol sowie das Verhältnis von Propylencarbonat zu Polyethercarbonatpolyol kann mittels $^1$H-NMR (ein geeignetes Gerät ist von der Firma Bruker, DPX 400, 400 MHz; Pulsprogramm zg30, Wartezeit d1: 10s, 64 Scans) bestimmt werden. Die Probe wird jeweils in deuteriertem Chloroform gelöst. Die relevanten Resonanzen im $^1$H-NMR (bezogen auf TMS = 0 ppm) sind wie folgt:
Cyclisches Propylencarbonat (welches als Nebenprodukt gebildet wurde) mit Resonanz bei 4,5 ppm; Carbonat, resultierend aus im Polyethercarbonatpolyol eingebautem Kohlendioxid mit Resonanzen bei 5,1 bis 4,8 ppm; nicht abreagiertes Propylenoxid (PO) mit Resonanz bei 2,4 ppm; Polyetherpolyol (d.h. ohne eingebautes Kohlendioxid) mit Resonanzen bei 1,2 bis 1,0 ppm; das als Startermolekül (soweit vorhanden) eingebaute 1,8 Octandiol mit einer Resonanz bei 1,6 bis 1,52 ppm.

Der Gewichtsanteil (in Gew.-%) des im Polyethercarbonatpolyol gebundenen Carbonats (LC') in der Reaktionsmischung wurde nach Formel (V) berechnet,

$$LC' = \frac{[F(5{,}1-4{,}8) - F(4{,}5)] * 102}{N} * 100\% \qquad (V),$$

wobei sich der Wert für N ("Nenner" N) nach Formel (VI) berechnet:

$$N = [F(5{,}1-4{,}8) - F(4{,}5)] * 102 + F(4{,}5) * 102 + F(2{,}4) * 58 + 0{,}33 * F(1{,}2-1{,}0) * 58 + 0{,}25 * F(1{,}6-1{,}52) * 146$$

(VI)

Dabei gelten folgende Abkürzungen:

F(4,5) = Fläche der Resonanz bei 4,5 ppm für cyclisches Carbonat (entspricht einem H Atom);

F(5,1-4,8) = Fläche der Resonanz bei 5,1-4,8 ppm für Polyethercarbonatpolyol und einem H-Atom für cyclisches Carbonat;

F(2,4) = Fläche der Resonanz bei 2,4 ppm für freies, nicht abreagiertes PO;

F(1,2-1,0) = Fläche der Resonanz bei 1,2-1,0 ppm für Polyetherpolyol;

F(1,6-1,52) = Fläche der Resonanz bei 1,6 bis 1,52 ppm für 1,8-Octandiol (Starter), soweit vorhanden.

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert aus der Molmasse des eingesetzten Starters 1,8-Octandiol (soweit vorhanden).

Der Gewichtsanteil (in Gew.-%) an cyclischem Carbonat (CC') in der Reaktionsmischung lässt sich nach Formel (VII) berechnen,

$$CC' = \frac{F(4,5) * 102}{N} * 100\% \quad \text{(VII)},$$

wobei sich der Wert für N nach Formel (VI) berechnet.

Um aus den Werten der Zusammensetzung der Reaktionsmischung die Zusammensetzung bezogen auf den Polymer-Anteil (bestehend aus Polyetherpolyol, welches aus Starter und Propylenoxid während der unter $CO_2$-freien Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung, d.h. cyclisches Propylencarbonat sowie ggf. vorhandenes, nicht umgesetztes Propylenoxid, rechnerisch eliminiert. Der Gewichtsanteil der Carbonat-Wiederholungseinheiten im Polyethercarbonatpolyol wurde in einen Gewichtsanteil Kohlendioxid mittels des Faktors F = 44/(44+58), wobei 44 g/mol die Molmasse von Kohlendioxid und 58 g/mol die Molmasse von Propylenoxid ist, umgerechnet. Die Angabe des $CO_2$-Gehalts im Polyethercarbonatpolyol ist normiert auf den Anteil des Polyethercarbonatpolyol-Moleküls, das bei der Copolymerisation und ggf. den Aktivierungsschritten in Gegenwart von $CO_2$ gebildet wurde, d.h. der Anteil des Polyethercarbonatpolyol-Moleküls, der aus dem Starter - 1,8-Octandiol, soweit vorhanden- sowie aus der Reaktion des Starters mit Epoxid resultiert, das unter $CO_2$-freien Bedingungen zugegeben wurde, wurde hierbei nicht berücksichtigt).

Die Herstellung von Polyethercarbonatpolyolen gemäß Komponente B geschieht beispielsweise, indem:

(a) eine H-funktionelle Starterverbindung oder ein Gemisch aus mindestens zwei H-funktionellen Starterverbindungen vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Starterverbindung oder dem Gemisch von mindestens zwei H-funktionellen Starterverbindungen vor oder nach der Trocknung zugesetzt wird,

($\beta$) zur Aktivierung eine Teilmenge (bezogen auf die Gesamtmenge der bei der Aktivierung und Copolymerisation eingesetzten Menge an Alkylenoxiden) von einem oder mehreren Alkylenoxiden zu der aus Schritt ($\alpha$) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt ($\beta$) zur Aktivierung auch mehrfach erfolgen kann,

($\gamma$) ein oder mehrere der Alkylenoxide und Kohlendioxid zu der aus Schritt ($\beta$) resultierenden Mischung zugesetzt werden, wobei die in Schritt ($\beta$) eingesetzten Alkylenoxide gleich oder verschieden sein können von den bei Schritt ($\gamma$) eingesetzten Alkylenoxiden.

Allgemein können zur Herstellung der Polyethercarbonatpolyole Alkylenoxide (Epoxide) mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen, ausgewählt aus der Gruppe, bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein-oder mehrfach epoxidierte Fette als Mono-, Di- und Triglyceride, epoxidierte Fettsäuren, C1-C24-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionellen Alkoxysilanen, wie beispielsweise 3-Glycidyloxypropyltrimethoxysilan, 3 -Glycidyioxypropyltriethoxysilan, 3-Glycidyloxypropyltripropoxysilan, 3 -Glycidyloxypropyl-methyl-dimethoxysilan, 3-Glycidyloxypropylethyldiethoxysilan, 3-Glycidyloxypropyltrlisopropoxysilan. Vorzugsweise werden als Alkylenoxide Ethylenoxid und/oder Propylenoxid und/oder 1,2 Butylenoxid, besonders bevorzugt Propylenoxid, eingesetzt.

In einer bevorzugten Ausführungsform der Erfindung liegt der Anteil an Ethylenoxid an der insgesamt eingesetzten Menge an Propylenoxid und Ethylenoxid bei ≥ 0 und ≤ 90 Gew.-%, bevorzugt bei ≥ 0 und ≤ 50 Gew.-% und besonders bevorzugt ist kein Ethylenoxid eingesetzt.

Als geeignete H-funktionelle Startverbindung können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und - $CO_2H$, bevorzugt sind -OH und $-NH_2$, besonders bevorzugt ist -OH. Als H-funktionelle Starterverbindung wird beispielsweise eine oder mehrere Verbindungen ausgewählt aus der Gruppe bestehend aus Wasser, ein- oder mehrwertigen Alkoholen, mehrwertigen Aminen, mehrwertigen Thiolen, Aminoalkoholen, Thioalkoholen, Hydroxyestern, Polyetherpolyolen, Polyesterpolyolen, Polyesteretherpolyolen, Polyethercarbonatpolyolen, Polycarbonatpolyolen, Polycarbonaten, Polyethyleniminen, Polyetheraminen (z. B. sogenannte Jeffamine® von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofuranen (z. B. PolyTHF® der BASF, wie z. B. PolyTHF® 250, 650S, 1000, 1000S, 1400, 1800, 2000), Polytetrahydrofuranaminen (BASF Produkt Polytetrahydrofuranamin 1700), Polyetherthiolen, Polyacrylatpolyolen, Ricinusöl, das Mono-oder Diglycerid von Ricinolsäure, Monoglyceriden von Fettsäuren, chemisch modifizierte Mono-, Di- und/oder Triglyceriden von Fettsäuren, und $C_1$- bis $C_{24}$-Alkyl-Fettsäureestern, die im Mittel mindestens 2 OH-Gruppen pro Molekül enthalten, eingesetzt. Beispielsweise handelt es sich bei den $C_1$- bis $C_{24}$-Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, t-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-t-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, t-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Starterverbindungen geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton. In Mischungen von H-funktionellen Startern können auch dreiwertige Alkohole, wie beispielsweise Trimethylolpropan, Glycerin, Trishydroxyethylisocyanurat und Rizinusöl eingesetzt werden.

Die H-funktionellen Starterverbindungen können auch aus der Substanzklasse der Polyetherpolyole ausgewählt sein, insbesondere solchen mit einem Molekulargewicht $M_n$ im Bereich von 100 bis 4000 g/mol, vorzugsweise 250 bis 2000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100 Gew.-% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Covestro Deutschland AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Starterverbindungen können auch aus der Substanzklasse der Polyesterpolyole ausgewählt

sein, insbesondere solchen mit einem Molekulargewicht $M_n$ im Bereich von 200 bis 4500 g/mol, vorzugsweise 400 bis 2500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophthalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Starterverbindungen zur Herstellung der Polyethercarbonatpolyole dienen können. Falls Polyetherpolyole zur Herstellung der Polyesteretherpolyole eingesetzt werden, sind Polyetherpolyole mit einem zahlenmittleren Molekulargewicht $M_n$ von 150 bis 2000 g/mol bevorzugt.

Des Weiteren können als H-funktionelle Starterverbindungen Polycarbonatpolyole (wie beispielsweise Polycarbonatdiole) eingesetzt werden, insbesondere solchen mit einem Molekulargewicht $M_n$ im Bereich von 150 bis 4500 g/mol, vorzugsweise 500 bis 2500 g/mol, die beispielsweise durch Umsetzung von Phosgen, Dimethylcarbonat, Diethylcarbonat oder Diphenylcarbonat und di-und/oder polyfunktionellen Alkoholen oder Polyesterpolyolen oder Polyetherpolyolen hergestellt werden. Beispiele zu Polycarbonatpolyolen finden sich z. B. in der EP 1359177 A1. Beispielsweise können als Polycarbonatdiole die Desmophen® C-Typen der Covestro Deutschland AG verwendet werden, wie z. B. Desmophen® C 1100 oder Desmophen® C 2200.

Ebenfalls können Polyethercarbonatpolyole als H-funktionelle Starterverbindungen eingesetzt werden. Insbesondere werden Polyethercarbonatpolyole, die nach dem oben beschriebenen Verfahren hergestellt werden, eingesetzt. Diese als H-funktionelle Starterverbindungen eingesetzten Polyethercarbonatpolyole werden hierzu in einem separaten Reaktionsschritt zuvor hergestellt.

Bevorzugte H-funktionelle Starterverbindungen sind Alkohole der allgemeinen Formel (VIII),

$$HO\text{-}(CH_2)_x\text{-}OH \qquad (VIII),$$

wobei x eine Zahl von 1 bis 20, bevorzugt eine gerade Zahl von 2 bis 20 ist. Beispiele für Alkohole gemäß Formel (VIII) sind Ethylenglycol, 1,4-Butandiol, 1,6-Hexandiol, 1,8-Octandiol, 1,10 Decandiol und 1,12-Dodecandiol. Weitere bevorzugte H-funktionelle Starterverbindungen sind Neopentylglykol, Trimethylolpropan, Glycerin, Pentaerythrit, Umsetzungsprodukte der Alkohole gemäß Formel (VIII) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Startverbindungen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Starterverbindungen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt ein zahlenmittleres Molekulargewicht $M_n$ im Bereich von 62 bis 4500 g/mol und insbesondere ein zahlenmittleres Molekulargewicht $M_n$ im Bereich von 62 bis 3000 g/mol, ganz besonders bevorzugt ein Molekulargewicht von 62 bis 1500 g/mol. Bevorzugt haben die Polyetherpolyole eine Funktionalität von $\geq 2$ bis $\leq 3$.

In einer bevorzugten Ausführungsform der Erfindung ist das Polyethercarbonatpolyol durch Anlagerung von Kohlendioxid und Alkylenoxiden an H-funktionelle Starterverbindungen unter Verwendung von Multimetallcyanid-Katalysatoren (DMC-Katalysatoren) erhältlich. Die Herstellung von Polyethercarbonatpolyolen durch Anlagerung von Alkylenoxiden und $CO_2$ an H-funktionelle Starterverbindungen unter Verwendung von DMC-Katalysatoren ist beispielsweise aus der EP-A 0222453, WO-A 2008/013731 und EP-A 2115032 bekannt.

DMC-Katalysatoren sind im Prinzip aus dem Stand der Technik zur Homopolymerisation von Epoxiden bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO-A 97/40086, WO-A 98/16310 und WO-A 00/47649 beschrieben sind, besitzen eine sehr hohe Aktivität in der Homopolymerisation von Epoxiden und ermöglichen die Herstellung von Polyetherpolyolen und/oder Polyethercarbonatpolyolen bei sehr geringen Katalysatorkonzentrationen (25 ppm oder weniger). Ein typisches Beispiel sind die in EP-A 700 949 beschriebenen hochaktiven DMC-Katalysatoren, die neben einer Doppelmetallcyanid-Verbindung (z.B. Zinkhexa-cyanocobaltat(III)) und einem organischen Komplexliganden (z.B. t.-Butanol) noch einen Polyether mit einem zahlenmittlerem Molekulargewicht $M_n$ größer als 500 g/mol enthalten.

Der DMC-Katalysator wird zumeist in einer Menge von $\leq 1$ Gew.-%, vorzugsweise in einer Menge von $\leq 0,5$

Gew.-%, besonders bevorzugt in einer Menge von ≤ 500 ppm und insbesondere in einer Menge von ≤ 300 ppm, jeweils bezogen auf das Gewicht des Polyethercarbonatpolyols eingesetzt.

Zur thermischen Reduktion der flüchtigen Bestandteile können die dem Fachmann aus dem Stand der Technik allgemein bekannten Methoden eingesetzt werden. Beispielsweise kann die thermische Reduktion der flüchtigen Bestandteile mittels Dünnschichtverdampfung, Kurzwegverdampfung oder Fallfimverdampfung erreicht werden, wobei dies bevorzugt unter vermindertem Druck (Vakuum) erfolgt. Daneben können auch klassische Destillationsverfahren zum Einsatz kommen, bei denen das Polyethercarbonatpolyol z.B. in einem Kolben oder Rührkessel auf eine Temperatur von 80 bis 200°C erhitzt wird, und die leicht flüchtigen Bestandteile über Kopf abdestilliert werden. Zur Steigerung der Effizienz der Destillation kann dabei sowohl unter vermindertem Druck und/oder Einsatz eines inerten Strippgases (z.B. Stickstoff) und/oder Einsatz eines Schleppmittels (z.B. Wasser oder inertes organisches Lösungsmittel) gearbeitet werden. Daneben kann die Reduktion der flüchtigen Bestandteile auch durch Vakuum-Strippen in einer Packungskolonne erfolgen, wobei als Strippgas üblicherweise Wasserdampf oder Stickstoff zum Einsatz kommen.

Bevorzugt weist das Polyethercarbonatpolyol einen Gehalt an Carbonatgruppen ("aus Kohlendioxid stammenden Einheiten"), berechnet als $CO_2$, von ≥ 2,0 Gew.-% und ≤ 30,0 Gew.-%, bevorzugt von ≥ 5,0 Gew.-% und ≤ 28,0 Gew.-% und besonders bevorzugt von ≥ 10,0 Gew.-% und ≤ 25,0 Gew.-% auf.

Bevorzugt weisen das oder die Polyethercarbonatpolyole eine Hydroxylzahl von ≥ 20 mg KOH/g bis ≤ 250 mg KOH/g auf und sind erhältlich durch Copolymerisation von ≥ 2,0 Gew.-% bis ≤ 30,0 Gew.-% Kohlendioxid und ≥ 70 Gew.-% bis ≤ 98 Gew.-% Propylenoxid in Gegenwart eines hydroxyfunktionellen Startermoleküls, wie beispielsweise Trimethylolpropan und/oder Glycerin und/oder Propylenglykol und/oder Sorbitol. Die Hydroxylzahl kann gemäß DIN 53240-1:2013-06 bestimmt werden.

Bevorzugte Polyethercarbonatpolyole haben ein Molekulargewicht $M_n$ von 400 bis 10000 g/mol, besonders bevorzugt von 500 bis 6000 g/mol.

Das Zahlenmittel $M_n$ und das Gewichtsmittel $M_w$ des Molekulargewichts sowie die Polydispersität ($M_w/M_n$) der Produkte wurde mittels Gelpermeationschromatographie (GPC) bestimmt. Es wurde vorgegangen nach DIN 55672-1 (März 2016): "Gelpermeationschromatographie, Teil 1 - Tetrahydrofuran als Elutionsmittel" (SECurity GPC-System von PSS Polymer Service, Flussrate 1,0 ml/min; Säulen: 2×PSS SDV linear M, 8x300 mm, 5 µm; RID-Detektor). Dabei wurden Polystyrolproben bekannter Molmasse zur Kalibrierung verwendet.

In einer weiteren Ausführungsform wird ein Polyethercarbonatpolyol eingesetzt, enthaltend Blöcke gemäß Formel (IV), wobei das Verhältnis e/f von 2 : 1 bis 1 : 20 beträgt.

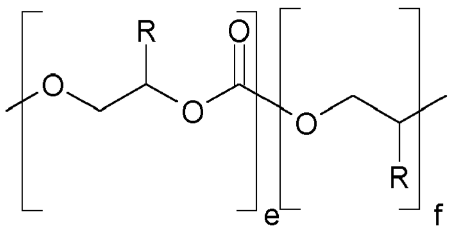

(IV)

Besonders bevorzugt sind Polyethercarbonatpolyole mit einer Hydroxylzahl gemäß DIN 53240-1:2013-06 von ≥ 20 mg KOH/g bis ≤ 120 mg KOH/g.

Ganz besonders bevorzugt weist das Polyethercarbonatpolyol außerdem einen $CO_2$-Gehalt von 10 bis 20 Gew.-% auf.

Komponente C

Die erfindungsgemäßen Zusammensetzungen enthalten optional einen oder mehrere Thermo-und/oder Umesterungsstabilisatoren.

Als Thermostabilisatoren eignen sich bevorzugt Triphenylphosphin, Tris-(2,4-di-tert-butylphenyl)phosphit (Irgafos® 168), Tetrakis-(2,4-di-tert-butylphenyl)-[1,1-biphenyl]-4,4'-diylbisphosphonit, Octadecyl-3-(3,5-di-tert-butyl-4-hydroxyphenyl)-propionat (Irganox® 1076), Bis-(2,4-dicumylphenyl)-pentaerythritoldiphosphit (Doverphos® S-9228 PC), Bis-(2,6-di-tert-butyl-4-methylphenyl)-pentaerythritoldiphosphit (ADK STAB PEP-36). Sie werden allein oder im Gemisch (z. B. Irganox® B900 (Gemisch aus Irgafos® 168 und Irganox® 1076 im Verhältnis 4:1) oder Doverphos® S-9228 PC mit Irganox® B900 bzw. Irganox® 1076) eingesetzt.

Als Umesterungsstabilisatoren sind bevorzugt Phosphate oder Sulfonsäureester enthalten. Bevorzugt ist Triisooctylphosphat als Umesterungsstabilisator enthalten.

Die Thermostabilisatoren und/oder Umesterungsstabilisatoren werden bevorzugt in einer Menge bis zu 1,0 Gew.-%, besonders bevorzugt in einer Gesamtmenge von 0,005 Gew.-% bis 0,5 Gew.-%, ganz besonders bevorzugt

0,01 Gew.-% bis 0,2 Gew.-%, eingesetzt.

**Komponente D**

Die erfindungsgemäßen Zusammensetzungen enthalten bevorzugt als Additiv mindestens einen UV-Absorber. Die UV-Absorber weisen eine möglichst geringe Transmission unterhalb 400 nm und eine möglichst hohe Transmission oberhalb von 400 nm auf. Für den Einsatz in der erfindungsgemäßen Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin® 234, BASF SE, Ludwigshafen), 2-(2'-Hydroxy-5'-(tert.-octyl)-phenyl)-benzotriazol (Tinuvin® 329, BASF SE, Ludwigshafen), Bis-(3-(2H-benztriazolyl)-2-hydroxy-5-tert.-octyl)methan (Tinuvin® 360, BASF SE, Ludwigshafen), 2-(4,6-Diphenyl-1,3,5-triazin-2-yl)-5-(hexyloxy)-phenol (Tinuvin® 1577, BASF SE, Ludwigshafen), sowie Benzophenone wie 2,4-Dihydroxybenzophenon (Chimasorb® 22 , BASF SE, Ludwigshafen) und 2-Hydroxy-4-(octyloxy)-benzophenon (Chimassorb® 81, BASF SE, Ludwigshafen), 2,2-Bis [[(2-cyano-1-oxo-3,3 -diphenyl-2-propenyl)oxy] -methyl] -1,3 -propandiylester (9CI) (Uvinul® 3030, BASF SE, Ludwigshafen), 2-[2-Hydroxy-4-(2-ethylhexyl)oxy]phenyl-4,6-di(4-phenyl)phenyl-1,3,5-triazine (Tinuvin® 1600, BASF SE, Ludwigshafen), Tetraethyl-2,2'-(1,4-phenylen-dimethyliden)-bismalonat (Hostavin® B-Cap, Clariant AG) oder N-(2-Ethoxyphenyl)-N'-(2-ethylphenyl)-ethandiamid (Tinuvin® 312, CAS-Nr. 23949-66-8, BASF SE, Ludwigshafen).

Besonders bevorzugte spezielle UV-Stabilisatoren sind Tinuvin(R) 360, Tinuvin(R) 329, Tinuvin(R) 312, Tinuvin® 326 und/oder Tinuvin® 1600, ganz besonders bevorzugt sind Tinuvin® 329, Tinuvin® 326 und/oder Tinuvin® 360.

Es können auch Mischungen der genannten Ultraviolett-Absorber eingesetzt werden.

Sofern UV-Absorber enthalten sind, enthält die Zusammensetzung bevorzugt Ultraviolett-Absorber in einer Menge bis 1,0 Gew.-%, weiter bevorzugt bis 0,8 Gew.-%, besonders bevorzugt 0,05 Gew.-% bis 0,5 Gew.-%, ganz besonders bevorzugt 0,08 Gew.-% bis 0,4 Gew.-%, äußerst bevorzugt 0,1 Gew.-% bis 0,3 Gew.-%, bezogen auf die Gesamtzusammensetzung.

**Komponente E**

Zusätzlich sind optional sonstige übliche Additive ("weitere Additive"), vorzugsweise bis zu 10,0 Gew.-%, weiter bevorzugt 0,1 Gew.-% bis 6,0 Gew.-%, besonders bevorzugt 0,1 Gew.-% bis 3,0 Gew.-%, ganz besonders bevorzugt 0,2 Gew.-% bis 1,0 Gew.-%, insbesondere bis 0,5 Gew.-%, sonstige übliche Additive ("weitere Additive") enthalten. Die Gruppe der weiteren Additive umfasst keine Thermostabilisatoren und/oder Umesterungsstabilisatoren und keine UV-Absorber, da diese bereits als Komponenten C und D beschrieben sind. Es versteht sich, dass Komponente E auch kein Polyethercarbonatpolyol umfasst, da dieses bereits als Komponente B beschrieben ist.

Solche Additive, wie sie üblicherweise bei Polycarbonaten zugesetzt werden, sind beispielsweise in EP-A 0 839 623, WO-A 96/15102, EP-A 0 500 496 oder "Plastics Additives Handbook", Hans Zweifel, 5th Edition 2000, Hanser Verlag, München beschrieben. Die weiteren Additive sind bevorzugt ausgewählt aus der Gruppe der Antioxidantien, Entformungsmittel, Flammschutzmittel, weitere Stabilisatoren, IR-Absorber, Antistatika, optischen Aufheller, Farbmittel wie organische Farbstoffe und/oder Additive zur Lasermarkierung. Diese werden bevorzugt in den für Polycarbonat üblichen Mengen eingesetzt. Diese Additive können einzeln oder auch im Gemisch zugesetzt werden.

Die Zusammensetzung kann frei von Entformungsmitteln, z.B. (Glycerinmonostearat) GMS und Pentaerythrittetrastearat (PETS) sein.

Besonders bevorzugt ist in den erfindungsgemäßen Zusammensetzungen mindestens ein Thermostabilisator und /oder Umesterungsstabilisator (Komponente C) und/oder ein UV-Absorber enthalten.

Es versteht sich, dass die eingesetzten Komponenten übliche Verunreinigungen, die beispielsweise aus ihren Herstellungsprozessen herrühren, enthalten können. Es ist bevorzugt, möglichst reine Komponenten einzusetzen. Es versteht sich weiterhin, dass diese Verunreinigungen auch bei einer geschlossenen Formulierung der Zusammensetzung enthalten sein können. Die Verunreinigungen sind Teil des Gesamtgewichts der jeweiligen Komponente.

Die Herstellung der erfindungsgemäßen Zusammensetzungen, enthaltend die Komponenten A und B, sowie ggf. C und/oder ggf. D und/oder ggf. E, erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen aus Granulaten oder Granulaten und Pulvern mit den Komponenten B bis ggf. E verwendet werden.

Es können auch Vormischungen verwendet werden, die aus Lösungen der Mischungskomponenten in geeigneten Lösungsmitteln hergestellt worden sind, wobei gegebenenfalls in Lösung homogenisiert wird und das Lösungsmittel anschließend entfernt wird.

Insbesondere können hierbei die Komponenten B bis E der erfindungsgemäßen Zusammensetzung durch bekannte Verfahren oder als Masterbatch in das Polycarbonat eingebracht werden.

Die Verwendung von Masterbatchen ist zum Einbringen der Komponenten B bis E, einzeln oder in Mischung, bevorzugt.

In diesem Zusammenhang kann die erfindungsgemäße Zusammensetzung in üblichen Vorrichtungen wie Schneckenextrudern (zum Beispiel Zweischneckenextruder, ZSK), Knetern, Brabender-oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann können die restlichen Ausgangsstoffe einzeln und/oder ebenfalls gemischt hinzugegeben werden.

Die Zusammenführung und Durchmischung einer Vormischung in der Schmelze kann auch in der Plastifiziereinheit einer Spritzgussmaschine erfolgen. Hierbei wird die Schmelze im anschließenden Schritt direkt in einen Formkörper überführt.

Die erfindungsgemäßen Zusammensetzungen können auf üblichen Maschinen, beispielsweise auf Extrudern oder Spritzgussmaschinen, zu beliebigen Formkörpern, wie beispielsweise Folien, Platten oder Flaschen, in üblicher Weise verarbeitet werden.

Die Herstellung der Formteile erfolgt vorzugsweise durch Spritzguss, Extrusion oder aus Lösung in einem Gießprozess.

Die erfindungsgemäßen Zusammensetzungen sind zur Herstellung von Mehrschichtsystemen geeignet. Hierbei wird die Polycarbonatzusammensetzung in einer oder mehreren Schicht(en) auf einen geformten Gegenstand aus einem Kunststoff aufgebracht. Das Aufbringen kann zugleich mit oder unmittelbar nach der Formgebung des Formkörpers geschehen, zum Beispiel durch Hinterspritzen einer Folie, Coextrusion oder Mehrkomponentenspritzguss. Das Aufbringen kann aber auch auf den fertig geformten Grundkörper geschehen, z.B. durch Lamination mit einem Film, Umspritzen eines vorhandenen Formkörpers oder durch Beschichtung aus einer Lösung.

Die erfindungsgemäßen Zusammensetzungen sind zur Herstellung von Bauteilen im Automotive-Bereich, etwa für Blenden, Scheinwerferabdeckungen oder Teile davon, oder -rahmen, Linsen und Kollimatoren oder Lichtleiter sowie zur Herstellung von transparenten Rahmenbauteilen im EE (Elektro/Elektronik)- und IT-Bereich geeignet, insbesondere auch Teile von Beleuchtungseinheiten, insbesondere für Anwendungen, die hohe Anforderungen an die Fließfähigkeit stellen (Dünnschichtanwendungen). Solche Anwendungen sind beispielsweise Bauteile für Bildschirme oder Gehäuse, etwa für Ultrabooks oder Rahmen für LED-Display-Technologien, z.B. OLED-Displays oder LCD-Displays oder auch für E-Ink-Geräte. Weitere Anwendungsfelder sind transparente Gehäuse- oder Abdeckteile von mobilen Kommunikationsendgeräten, wie Smartphones, Tablets, Ultrabooks, Notebooks oder Laptops, aber auch Navigationsgeräte, Smartwatches oder Herzfrequenzmesser, sowie Elektroanwendungen in Dünnwand-Ausfertigungen, z. B. Haus- und Industrie-Vernetzungseinheiten und Smart Meter Gehäusebauteile.

Die Formkörper und Extrudate aus den erfindungsgemäßen Zusammensetzungen sowie Formteile, Extrudate und Mehrschichtsysteme enthaltend die erfindungsgemäßen Zusammensetzungen sind ebenfalls Gegenstand dieser Anmeldung.

Die erfindungsgemäßen Zusammensetzungen zeichnen sich insbesondere dadurch aus, dass sie aufgrund ihres Gehalt an Polyethercarbonatpolyol über ausgezeichnete rheologische und optische Eigenschaften sowie reduzierte Gleit- und Haftreibungskoeffizienten verfügen. Ein weiterer Vorteil der erfindungsgemäßen Zusammensetzungen liegt darin, dass auf ein zusätzliches Entformungsmittel, beispielsweise PETS (Pentaerythrittetrastearat), verzichtet werden kann. Diese Additive setzen häufig die thermischen Eigenschaften herab. Daher umfasst die erfindungsgemäße Zusammensetzung bevorzugt kein Pentaerythrittetrastearat. Ein weiterer Gegenstand der vorliegenden Erfindung ist auch die Verwendung von Polyethercarbonatpolyol, insbesonders von einem oder mehreren der vorgehend vorbeschriebenen, zur Verbesserung der Transmission Ty und/oder zur Senkung der Gleit- und Haftreibungskoeffizienten von Zusammensetzungen umfassend aromatisches Polycarbonat (Komponente A), gegebenenfalls Thermostabilisator und/oder Umesterungsstabilisator (Komponente C) und gegebenenfalls weitere Additive (Komponente D), wobei sich die Transmission Ty beispielsweise nach ISO 13468-2:2006 bei 4 mm Dicke und die Gleit- und Haftreibungskoeffizienten an Spritzgussscheiben nach der in EP 1 377 812 B1 beschriebenen Methode bestimmen lassen.

Die für die erfindungsgemäßen Zusammensetzungen vorstehend beschriebenen Ausführungsformen gelten - soweit anwendbar - auch für die erfindungsgemäßen Verwendungen.

Die nachfolgenden Beispiele sollen die Erfindung illustrieren, ohne sie jedoch einzuschränken.

## Beispiele

### 1. Beschreibung der Rohstoffe und Prüfmethoden

Die in den folgenden Beispielen beschriebenen Polycarbonatzusammensetzungen wurden auf einem Extruder ZE 25 der Fa. Berstorff mit einem Durchsatz von 10 kg/Std. durch Compoundierung hergestellt. Die Schmelzetemperatur

betrug 275 °C.

**Komponente A-1**: Lineares Polycarbonat auf Basis von Bisphenol A mit einer Schmelze-Volumenfließrate MVR von 9,0 $cm^3$/(10 min) (gemäß ISO 1133:2012-03, bei einer Prüftemperatur 300°C und 1,2 kg Belastung).

**Komponente A-2:** Lineares Polycarbonat auf Basis von Bisphenol A in Pulverform mit einer Schmelze-Volumenfließrate MVR von 6,0 $cm^3$/(10 min) (gemäß ISO 1133:2012-03, bei einer Prüftemperatur 300°C und 1,2 kg Belastung).

**Komponente B-1**: Polyethercarbonatpolyol, Funktionalität: 2,82; Hydroxylzahl gemäß DIN 53240-1:2013-06: 54 mg KOH/g, 14 Gew.-% $CO_2$-Anteil; hergestellt durch Copolymerisation von Propylenoxid und Kohlendioxid mit Glycerin und Propylenglykol als H-funktionelle Starterverbindungen in Gegenwart eines Doppelmetallcyanid-Katalysators.

**Komponente B-2:** Polyethercarbonatpolyol, Funktionalität: 2,0; Hydroxylzahl gemäß DIN 53240-1:2013-06: 56 mg KOH/g, 19 Gew.-% $CO_2$-Anteil, hergestellt durch Copolymerisation von Propylenoxid und Kohlendioxid mit Propylenglykol als H-funktionelle Starterverbindung in Gegenwart eines Doppelmetallcyanid-Katalysators.

**Komponente B-3:** Polyethercarbonatpolyol, Funktionalität: 2,82; Hydroxylzahl gemäß DIN 53240-1:2013-06: 170 mg KOH/g; 12 Gew.-% $CO_2$-Anteil, hergestellt durch Copolymerisation von Propylenoxid und Kohlendioxid mit Glycerin und Propylenglykol als H-funktionelle Starterverbindung in Gegenwart eines Doppelmetallcyanid-Katalysators.

**Komponente C-1**: Thermostabilisator Triphenylphosphin der Firma BASF.

**Komponente C-2**: Umesterungsinhibitor Triisooctylphosphat (TOF) der Firma Lanxess AG.

**Komponente D**: UV-Absorber Tinuvin 329 der Firma BASF.

**$CO_2$-Gehalt im Polyethercarbonatpolyol:**

Der Anteil an eingebautem $CO_2$ im resultierenden Polyethercarbonatpolyol wurde mittels $^1$H-NMR (Firma Bruker, DPX 400, 400 MHz; Pulsprogramm zg30, Wartezeit dl: 10s, 64 Scans) wie in der allgemeinen Beschreibung angegeben bestimmt.

Die **Vicat-Erweichungstemperatur VST/B50** als Maß für die Wärmeformbeständigkeit wurde gemäß ISO 306:2013 an Prüfkörpern der Abmessung 80 mm x 10 mm x 4 mm mit einer Stempellast von 50 N und einer Aufheizgeschwindigkeit von 50°C/h bzw. von 120 °C/h mit dem Gerät Coesfeld Eco 2920 der Firma Coesfeld Materialtest bestimmt.

Die Bestimmung des **Schmelze-Volumenfließrate (MVR)** erfolgte nach ISO 1133:2012-03 (bei einer Prüftemperatur von 300 °C, Masse 1,2 kg bzw. 2,16 kg) mit dem Gerät Zwick 4106 der Firma Zwick Roell. Zusätzlich wurde der MVR nach 20 Minuten Vorwärmzeit gemessen (IMVR20'). Dies ist ein Maß für die Schmelzestabilität unter erhöhtem thermischem Stress.

Der **Yellowness-Index (Y.I.)** wurde gemäß ASTM E 313-10 (Beobachter: 10° / Lichtart: D65) an Musterplatten mit einer Schichtdicke von 4 mm bestimmt.

**Die Transmission Ty im VIS-Bereich** des Spektrums (visuelle Transmission, D65, 10° Beobachtung) wurde nach ISO 13468-2:2006 an Musterplatten mit einer Schichtdicke von 4 mm bzw. 12 mm bestimmt.

Die **Trübung** wurde bestimmt nach ASTM D1003:2013 an Musterplatten mit einer Schichtdicke von 4 mm bzw. 12 mm.

Die **Gleit- und Haftreibungskoeffizienten** wurden unter Verwendung einer modifizierten Spritzgießmaschine vom Typ Arburg-370S-800-150 bestimmt. Das Verfahren ist beschrieben in EP 1 377 812 B1. Haftreibung ist die Reibzahl, die aus der notwendigen Kraft abgeleitet wird, um relativ zueinander ruhende Körper (Stempel/Prüfkörper) in Bewegung zu setzen (Schwellenwert). Die Gleitreibung wird entsprechend aus der konstanten Kraft abgeleitet, die notwendig ist, um die Bewegung gleichmäßig fortzusetzen.

Der Reibungskoeffizient ist wie folgt definiert: FR = $\mu$ x FN oder, nach $\mu$ umgestellt,

$\mu$ = FR/FN (FN= Normalkraft, FR= Reibkraft, $\mu$ = Reibungskoeffizient).
Bei Kreisbewegung gilt folgender Zusammenhang: FR = Md/rm
(Md = Drehmoment, rm = mittlerer Radius der Reibfläche (Ringfläche)) und Md/rm= $\mu$ x FN und, nach $\mu$ umgestellt, $\mu$= Md/(rm x FN).

In einem Reibungskoeffizientenwerkzeug wurde ein scheibenförmiger Probekörper mit einem Außendurchmesser von 92 mm und einer Dicke von 2,6 mm hergestellt. Dieser besaß am äußeren Rand einen 5 mm hohen und 3 mm breiten Steg, an dem sich flache Vertiefungen, vergleichbar zu einer Zahnriemenscheibe, befanden, wodurch das Drehmoment vom Werkzeug auf den Prüfkörper übertragen wird.

Es erlaubt die direkte Ermittlung des Haftreibungskoeffizienten und Gleitreibungskoeffizienten an einem scheibenförmigen Prüfkörper unmittelbar vor der Entformung. Hierbei gilt die Beziehung, dass die Reibkraft proportional dem Drehmoment ist. Beim Öffnen des Werkzeugs fährt ein mit einem Drehmomentaufnehmer verbundener Stempel mit einer definierten Normalkraft FN gegen das Formteil (Reibpartner). Auf der anderen Formteilseite wird der Prüfkörper gehalten und in Rotation versetzt. Dabei werden mittels des am Stempel gemessenen Drehmoments der Haftreibungskoeffizient und der Gleitreibungskoeffizient zwischen Stempel und Prüfkörper ermittelt. Da die Reibung durch die Unebenheit der aufeinander gleitenden Flächen verursacht wird (verhaken), wurde der Stempel mit einer mittleren Oberflächenrauhigkeit Ra = 0,05 $\mu$m ausgeführt.

Die Materialien wurden auf einer Spritzgießmaschine aufgeschmolzen und bei einer Schmelzetemperatur von 300 °C in das geschlossene Reibungskoeffizientenwerkzeug mit einer Werkzeugwandtemperatur von 90 °C eingespritzt und unter Nachdruck mit 400 bar 15 sec. lang gehalten. Nach einer Restkühlzeit von 17 sec. wurde das Werkzeug geringfügig geöffnet und die Haft- und Gleitreibungskoeffizienten wurden bestimmt.

Die Musterplatten wurden jeweils durch Spritzguss bei einer Schmelzetemperatur von 300 °C und einer Werkzeugwandtemperatur von 90 °C hergestellt.

Tabelle 1

| Tabelle 1 | V1 | 2 | 3 | 4 | 5 | 6 | 7 | 8 | 9 | 10 | 11 | 12 |
|---|---|---|---|---|---|---|---|---|---|---|---|---|
| **A1** | 85 | 85 | 85 | 85 | 85 | 85 | 85 | 85 | 85 | 85 | 85 | 85 |
| **A2** | 15 | 14,9 | 14,6 | 14,35 | 14,9 | 14,8 | 14,6 | 14,35 | 14,9 | 14,8 | 14,6 | 14,35 |
| **B1** | | 0,1 | 0,4 | 0,65 | | | | | | | | |
| **B2** | | | | | 0,1 | 0,2 | 0,4 | 0,65 | | | | |
| **B3** | | | | | | | | | 0,1 | 0,2 | 0,4 | 0,65 |
| **Prüfung** | | | | | | | | | | | | |
| **MVR 300°C/1.2kg** | 9,2 | 9,5 | 9,7 | 10,6 | 9,4 | 9,4 | 9,4 | 10,9 | 9,4 | 9,6 | 10,4 | 11,0 |
| **IMVR20' 300°C/1.2kg** | 9,2 | 10,2 | 10,9 | 14,1 | 9,9 | 9,9 | 10,2 | 12,6 | 10,1 | 10,6 | 12,0 | 14,1 |
| **DMVR/IMVR20'** | 0,0 | 0,7 | 1,2 | 3,5 | 0,5 | 0,5 | 0,8 | 1,7 | 0,7 | 1,0 | 1,6 | 3,1 |
| **Vicat VST B50** | 145,3 | 144,4 | 142,9 | 141,3 | 145,0 | 144,9 | 143,4 | 140,7 | 144,8 | 143,8 | 142,8 | 140,4 |
| **IZOD Kerbschlagzähigkeit ISO7391/180A 3mm** | | | | | | | | | | | | |
| **23°C** | 73z | 72z | 72z | 70z | 71z | 71z | 70z | 68z | 70z | 72z | 70z | 71z |
| **Optische Daten** | | | | | | | | | | | | |
| **300°C/80°C** | | | | | | | | | | | | |
| **Transmission** | 88,8 | 89,1 | 89,2 | 89,5 | 88,9 | 89,0 | 89,1 | 89,2 | 89,0 | 89,1 | 89,3 | 89,4 |
| **Yellowness Index** | 3,8 | 3,3 | 3,1 | 2,2 | 3,9 | 3,5 | 3,7 | 2,9 | 3,8 | 3,1 | 2,8 | 2,6 |
| **Trübung** | 0,9 | 0,5 | 0,4 | 0,4 | 0,4 | 0,4 | 0,3 | 0,5 | 0,4 | 0,4 | 0,4 | 0,3 |
| **Reibungskoeffizient** | | | | | | | | | | | | |
| **Haftreibung** | 0,60 | 0,46 | 0,3 | 0,26 | 0,52 | 0,54 | 0,43 | 0,32 | 0,61 | 0,52 | 0,44 | 0,34 |
| **Gleitreibung** | 0,62 | 0,49 | 0,36 | 0,32 | 0,55 | 0,55 | 0,49 | 0,39 | 0,59 | 0,55 | 0,51 | 0,42 |

Mit zunehmendem Anteil Polyethercarbonatpolyol weisen die erfindungsgemäßen Zusammensetzungen eine immer höhere Transmission auf (Vergleichsbeispiel V1, verglichen mit den erfindungsgemäßen Beispielen 2 bis 4, 5 bis 8 und 9 bis 12). Gleichzeitig werden der Yellowness-Index und die Trübung erniedrigt. Es ist ferner zu beobachten, dass auch die Reibungskoeffizienten (Haftreibung, Gleitreibung) durch den Zusatz von Polyethercarbonatpolyol erniedrigt werden, das Entformungsverhalten also verbessert. Darüber hinaus bewirken die Polyethercarbonatpolyole eine Verbesserung der Fließfähigkeit. Die Wärmeformbeständigkeit bleibt bei obigen Zusammensetzungen trotz des Zusatzes von Polyethercarbonatpolyol annähernd erhalten.

**Tabelle 2**

| | | V13 | 14 | 15 | 16 | 17 | 18 | 19 |
|---|---|---|---|---|---|---|---|---|
| **A1** | [Gew.-%] | 85 | 85 | 85 | 85 | 85 | 85 | 85 |
| **A2** | [Gew.-%] | 15 | 14,2 | 13,8 | 14,2 | 13,8 | 14,2 | 13,8 |
| **B1** | [Gew.-%] | | 0,8 | 1,2 | | | | |
| **B2** | [Gew.-%] | | | | 0,8 | 1,2 | | |
| **B3** | [Gew.-%] | | | | | | 0,8 | 1,2 |
| **Prüfung** | | | | | | | | |
| **MVR 300°C/1,2kg** | [$cm^3$/(10 min)] | 9,1 | 10,5 | 11,5 | 10,6 | 12,2 | 11,5 | 12,6 |
| **IMVR20' 300°C/1,2kg** | [$cm^3$/(10 min)] | 9,3 | 12,8 | 12,9 | 15,5 | 15,9 | 14,3 | 14,8 |
| **DMVR/IMVR20'** | | 0,2 | 2,3 | 1,4 | 4,9 | 3,7 | 2,8 | 2,2 |
| **Vicat VST B50** | [°C] | 144,5 | 139,7 | 137,1 | 139,6 | 137,1 | 139,0 | 136,8 |
| **Optische Daten** | | | | | | | | |
| **300°C/80°C** | | | | | | | | |
| **Transmission** | [%] | 88,74 | 89,07 | 89,12 | 89,29 | 89,47 | 89,45 | 89,5 |
| **Yellowness-Index** | | 3,68 | 2,17 | 2,14 | 2,71 | 2,29 | 2,48 | 2,33 |
| **Trübung** | [%] | 1,72 | 1,71 | 1,6 | 1,29 | 0,69 | 0,48 | 0,49 |

Größere Mengen Polyethercarbonatpolyol bewirken allmählich eine Senkung der Wärmeformbeständigkeit; bei einer Menge von 1,2 Gew.-% an Polyethercarbonatpolyol ist die Wärmeformbeständigkeit aber immer noch ausreichend. Gegenüber dem Vergleichsversuch V13 ist zu erkennen, dass bei den erfindungsgemäßen Zusammensetzungen durch den Zusatz von Polyethercarbonatpolyol eine Verbesserung der Fließfähigkeit, eine Erhöhung der Transmission und eine Absenkung von Y.I.-Wert sowie der Trübung erfolgen.

**Tabelle 3**

| | | V20 | V21 | 22 | V23 | 24 | 25 |
|---|---|---|---|---|---|---|---|
| **A1** | [Gew.-%] | 93 | 93 | 93 | 93 | 93 | 93 |
| **A2** | [Gew.-%] | 7 | 6,975 | 6,575 | 6,99 | 6,79 | 6,59 |
| **B2** | [Gew.-%] | | | 0,4 | | 0,2 | 0,4 |
| **C1** | [Gew.-%] | | 0,025 | 0,025 | | | |
| **C2** | [Gew.-%] | | | | 0,01 | 0,01 | 0,01 |
| **Prüfung** | | | | | | | |
| **MVR** | [$cm^3$/(10 min)] | 9,4 | 9,4 | 10,3 | 9,3 | 9,9 | 10,0 |
| **IMVR20' 300°C/1,2 kg** | [$cm^3$/(10 min)] | 9,5 | 9,6 | 12,0 | 9,5 | 10,3 | 12,0 |
| **DMVR/IMVR20'** | | 0,1 | 0,2 | 1,7 | 0,2 | 0,4 | 2,0 |
| **Vicat VST B50** | [°C] | 146,2 | 145,2 | 143,7 | 146,0 | 144,6 | 143,6 |
| **Optische Daten** | | | | | | | |

(fortgesetzt)

| | | V20 | V21 | 22 | V23 | 24 | 25 |
|---|---|---|---|---|---|---|---|
| **Probendicke (ro)** | | 4 | 4 | 4 | 4 | 4 | 4 |
| **L* (ro)** | | 95,63 | 95,8 | 95,83 | 95,6 | 95,72 | 95,75 |
| **a* (ro)** | | -0,27 | -0,07 | -0,09 | -0,27 | -0,22 | -0,23 |
| **b* (ro)** | | 1,81 | 0,88 | 0,85 | 1,85 | 1,47 | 1,47 |
| **Transmission (ro)** | [%] | 89,12 | 89,52 | 89,59 | 89,05 | 89,34 | 89,41 |
| **Yellowness-Index (ro)** | | 3,23 | 1,6 | 1,53 | 3,3 | 2,62 | 2,61 |
| **Trübung (ro)** | [%] | 0,46 | 0,57 | 0,43 | 0,5 | 0,43 | 0,4 |

Die zuvor genannten Effekte werden auch für Zusammensetzungen, enthaltend Thermostabilisator bzw. Umesterungsstabilisator (Komponente C1 bzw. Komponente C2) beobachtet.

**Tabelle 4**

| | | V26 | V27 | 28 | 29 |
|---|---|---|---|---|---|
| **A1** | [Gew.-%] | 93,0 | 93,0 | 93,0 | 93,0 |
| **A2** | [Gew.-%] | 7,0 | 6,8 | 6,6 | 6,4 |
| **B3** | [Gew.-%] | | | 0,2 | 0,4 |
| **D** | [Gew.-%] | | 0,2 | 0,2 | 0,2 |
| **Prüfung** | | | | | |
| **MVR** | [$cm^3$/(10 min)] | 9,4 | 9,9 | 10,3 | 12,6 |
| **IMVR20' 300°C/1,2kg** | [$cm^3$/(10 min)] | 9,5 | 10 | 11,1 | 14,5 |
| **DMVR/IMVR20'** | | 0,1 | 0,1 | 0,8 | 1,9 |
| **Vicat VST B50** | [°C] | 146,3 | 145 | 143,9 | 140,2 |
| **Optische Daten** | | | | | |
| **Probendicke (ro)** | | 4 | 4 | 4 | 4 |
| **L* (ro)** | | 95,6 | 95,37 | 95,65 | 95,58 |
| **a* (ro)** | | -0,25 | -0,41 | -0,39 | -0,43 |
| **b* (ro)** | | 1,78 | 2,32 | 1,97 | 2,03 |
| **Transmission (ro)** | [%] | 89,04 | 88,51 | 89,16 | 89,00 |
| **Yellowness-Index (ro)** | | 3,17 | 4,08 | 3,42 | 3,52 |
| **Trübung (ro)** | [%] | 0,49 | 1,19 | 0,44 | 0,69 |

Der Zusatz von UV-Absorbern bewirkt erwartungsgemäß aufgrund ihrer Eigenfarbe eine Erhöhung des Y.I.-Wertes. Doch auch hier lässt sich eine Absenkung des Y.I.-Wertes durch den Zusatz von Polyethercarbonatpolyol erzielen.

## Patentansprüche

**1.** Transparente thermoplastische Zusammensetzung, enthaltend

A) aromatisches Polycarbonat und
B) Polyethercarbonatpolyol,
C) ggf. mindestens einen Thermostabilisator und/oder Umesterungsstabilisator,

D) ggf. mindestens einen UV-Absorber und
E) ggf. ein oder mehrere von den Komponenten B, C und D verschiedene weitere Additive, wobei "transparent" eine visuelle Transmission Ty (D65 in 10° Beobachtung) von mindestens 84%, bestimmt nach ISO 13468-2:2006 bei einer Dicke von 4 mm, und eine Trübung < 5%, bestimmt nach ASTM D1003:2013, bei einer Schichtdicke von 4 mm, bedeutet.

**2.** Transparente thermoplastische Zusammensetzung nach Anspruch 1, enthaltend

A) 70,0 Gew.-% bis 99,95 Gew.-% aromatisches Polycarbonat und
B) 0,05 Gew.-% bis 2,0 Gew.-% Polyethercarbonatpolyol.

**3.** Transparente thermoplastische Zusammensetzung nach Anspruch 1, wobei die Zusammensetzung

A) 80,0 Gew.-% bis 99,9 Gew.-% aromatisches Polycarbonat und
B) 0,1 Gew.-% bis 1,2 Gew.-% Polyethercarbonatpolyol
C) 0 bis 1,0 Gew.-% mindestens eines Thermostabilisators und/oder Umesterungsstabilisators,
D) 0 bis 1,0 Gew.-% mindestens eines UV-Absorbers und
E) ggf. ein oder mehrere von den Komponenten B, C und D verschiedene weitere Additive enthält.

**4.** Transparente thermoplastische Zusammensetzung nach einem der vorhergehenden Ansprüche, wobei die Zusammensetzung mindestens 0,2 Gew.-% Polyethercarbonatpolyol enthält.

**5.** Transparente thermoplastische Zusammensetzung nach einem der vorhergehenden Ansprüche, enthaltend mindestens einen UV-Absorber als Komponente D.

**6.** Transparente thermoplastische Zusammensetzung nach einem der vorhergehenden Ansprüche, bestehend aus den Komponenten A, B, ggf. C, ggf. D, ggf. E und ggf. Blendpartnern.

**7.** Transparente thermoplastische Zusammensetzung nach einem der vorhergehenden Ansprüche, bestehend aus

A) 95,0 Gew.-% bis 99,9 Gew.-% aromatischem Polycarbonat und
B) 0,1 Gew.-% bis 1,2 Gew.-% Polyethercarbonatpolyol,
C) 0 bis 1,0 Gew.-% mindestens eines Thermostabilisators und/oder Umesterungsstabilisators,
D) 0 bis 1,0 Gew.-% mindestens eines UV-Absorbers und
E) ggf. einem oder mehreren weiteren Additiven, wobei die weiteren Additive ausgewählt sind aus der Gruppe, bestehend aus Antioxidantien, Entformungsmitteln, Flammschutzmitteln, IR-Absorbern, Antistatika, optischen Aufhellern, Farbmitteln wie organischen Farbstoffen und/oder Additiven zur Lasermarkierung.

**8.** Transparente thermoplastische Zusammensetzung nach einem der vorhergehenden Ansprüche, wobei als Polyethercarbonatpolyol mit einer Hydroxylzahl (OH-Zahl) gemäß DIN 53240-1:2013-06 von ≥ 20 mg KOH/g bis ≤ 120 mg KOH/g enthalten ist.

**9.** Transparente thermoplastische Zusammensetzung nach einem der vorhergehenden Ansprüche, wobei als Polyethercarbonatpolyol ein Polyethercarbonatpolyol mit einem $CO_2$-Gehalt von 10 Gew.-% bis 25 Gew.-% enthalten ist.

**9.** Transparente thermoplastische Zusammensetzung nach einem der vorhergehenden Ansprüche, wobei als Polyethercarbonatpolyol ausschließlich eines mit einer Hydroxylzahl gemäß DIN 53240-1:2013-06 von ≥ 20 mg KOH/g bis ≤ 120 mg KOH/g und/oder einem $CO_2$-Gehalt von 10 bis 25 Gew.-% enthalten ist.

**10.** Transparente thermoplastische Zusammensetzung nach einem der vorhergehenden Ansprüche, wobei das Polyethercarbonatpolyol eine Hydroxylzahl von ≥ 20 mg KOH/g bis ≤ 250 mg KOH/g, bestimmt nach DIN 53240-1:2013-06, aufweist und erhältlich ist durch Copolymerisation von ≥ 2,0 Gew.-% bis ≤ 30,0 Gew.-% Kohlendioxid und ≥ 70 Gew.-% bis ≤ 98 Gew.-% Propylenoxid in Gegenwart eines hydroxyfunktionellen Startermoleküls.

**11.** Transparente thermoplastische Zusammensetzung nach einem der vorhergehenden Ansprüche, wobei das Polyethercarbonatpolyol Blöcke gemäß Formel (IV) enthält, wobei das Verhältnis e/f von 2 : 1 bis 1 : 20 beträgt.

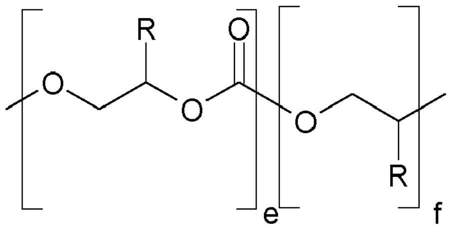

(IV)

**12.** Formteil, hergestellt aus einer transparenten thermoplastischen Zusammensetzung gemäß einem der vorhergehenden Ansprüche.

**13.** Formteil nach Anspruch 12, wobei das Formteil Teil einer Scheinwerferabdeckung oder eine Scheinwerferabdeckung, Teil eines Displays, Teil einer Beleuchtungseinheit oder eine Linse ist.

**14.** Verwendung von Polyethercarbonatpolyol zur Verbesserung der Transmission im VIS-Bereich einer transparenten thermoplastischen Zusammensetzung, basierend auf aromatischem Polycarbonat.

**15.** Verwendung nach Anspruch 14, wobei das Polyethercarbonatpolyol eine Hydroxylzahl gemäß DIN 53240-1:2013-06 von ≥ 20 mg KOH/g bis ≤ 120 mg KOH/g und/oder einen $CO_2$-Gehalt von 10 Gew.-% bis 25 Gew.-% aufweist.

Europäisches Patentamt
European Patent Office
Office européen des brevets

# EUROPÄISCHER RECHERCHENBERICHT

Nummer der Anmeldung
EP 20 17 6390

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>A | JP S62 36457 A (IDEMITSU KOSAN CO) 17. Februar 1987 (1987-02-17)<br>* Zusammenfassung *<br>* Ansprüche * | 1-9,12, 13<br>10,11, 14,15 | INV. C08L69/00 |
| X<br>A | EP 0 004 020 A1 (BAYER AG [DE]) 19. September 1979 (1979-09-19)<br>* Anspruch 1 *<br>* Beispiele 8,12 *<br>* Seite 2, Zeilen 9-16 * | 1-9,12, 13<br>10,11, 14,15 | |
| A | WO 2018/073313 A1 (REPSOL SA [ES]) 26. April 2018 (2018-04-26)<br>* Ansprüche *<br>* Beispiel 3; Tabelle 3 * | 1-15 | |

RECHERCHIERTE SACHGEBIETE (IPC)
C08L

Der vorliegende Recherchenbericht wurde für alle Patentansprüche erstellt

1

| Recherchenort | Abschlußdatum der Recherche | Prüfer |
|---|---|---|
| Den Haag | 3. November 2020 | Schlicke, Benedikt |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 20 17 6390

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-11-2020

| Im Recherchenbericht angeführtes Patentdokument | Datum der Veröffentlichung | Mitglied(er) der Patentfamilie | Datum der Veröffentlichung |
|---|---|---|---|
| JP S6236457 A | 17-02-1987 | KEINE | |
| EP 0004020 A1 | 19-09-1979 | EP 0004020 A1 | 19-09-1979 |
| | | JP S6241259 B2 | 02-09-1987 |
| | | JP S54127455 A | 03-10-1979 |
| | | US 4252922 A | 24-02-1981 |
| WO 2018073313 A1 | 26-04-2018 | BR 112019007848 A2 | 16-07-2019 |
| | | CA 3040327 A1 | 26-04-2018 |
| | | CN 110023374 A | 16-07-2019 |
| | | EP 3328915 A1 | 06-06-2018 |
| | | ES 2728271 T3 | 23-10-2019 |
| | | JP 2019536848 A | 19-12-2019 |
| | | KR 20190078592 A | 04-07-2019 |
| | | PT 3328915 T | 06-06-2019 |
| | | RU 2019110790 A | 12-10-2020 |
| | | US 2019315915 A1 | 17-10-2019 |
| | | WO 2018073313 A1 | 26-04-2018 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2015135958 A1
- WO 2017178583 A1
- EP 2530101 A1
- EP 3027673 B1
- EP 19189265
- WO 2012130760 A1
- EP 0222453 A2
- WO 2018219893 A1
- US 3028635 A
- US 2999825 A
- US 3148172 A
- US 2991273 A
- US 3271367 A
- US 4982014 A
- US 2999846 A
- DE 1570703 A
- DE 2063050 A
- DE 2036052 A
- DE 2211956 A
- DE 3832396 A
- FR 1561518 A
- JP 61062039 A
- JP 61062040 A
- JP 61105550 A
- EP 1359177 A1
- EP 0222453 A
- WO 2008013731 A
- EP 2115032 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- EP 0839623 A
- WO 9615102 A
- EP 0500496 A
- EP 1377812 B1


### In der Beschreibung aufgeführte Nicht-Patentliteratur


- Chemistry and Physics of Polycarbonates. **SCHNELL.** Polymer Reviews. Interscience Publishers, 1964, vol. 9
- Polycarbonates. **D. FREITAG ; U. GRIGO ; P.R. MÜLLER ; H. NOUVERTNE ; BAYER AG.** Encyclopedia of Polymer Science and Engineering. 1988, vol. 11, 648-718
- Polycarbonate, Polyacetale, Polyester, Celluloseester. **U. GRIGO ; K. KIRCHNER ; P.R. MÜLLER.** Becker/Braun, Kunststoff-Handbuch. Carl Hanser Verlag, 1992, vol. 3/1, 117-299
- **H. SCHNELL.** Chemistry and Physics of Polycarbonates. Interscience Publishers, 1964
- *CHEMICAL ABSTRACTS,* 23949-66-8
- **HANS ZWEIFEL.** Plastics Additives Handbook. Hanser Verlag, 2000